# EUROPEAN PATENT APPLICATION

(11) **EP 2 653 327 A1**
(43) Date of publication of application: **23.10.2013**
(21) Application number: 12425074.7
(22) Date of filing: 18.04.2012
(51) Int. Cl.: B60G 21/05, B60P 1/02, B60P 3/04

(54) **Loading body for the transport of live animals**

(71) Applicant: Carrozzeria Pezzaioli S.r.l., 25018 Montichiari (Brescia) (IT)
(72) Inventor: Pezzaioli, Giorgio, 25018 Montichiari, Brescia (IT)
(74) Representative: Pulieri, Gianluca Antonio

(57) **Abstract**

The invention is a loading body (1) for the transport of live animals comprising a loading deck (10) which the animals climb onto.

The body (1) comprises an axle (100) suitable for damping the static and dynamic actions which the wheels or wheel groups (500) are subjected to a result of the load and the motion.

The axle comprises two wheel carrier structures (110), positioned facing each other, one on the right and one on the left of the body (1), wherein each structure has the centre of rotation of the wheel it supports positioned higher than said loading deck (10) and a bar element (150) suitable for firmly joining said wheel carrier structures (110).

## Description

The object of the present invention relates to a loading body for the transport of live animals, in this specific case of a body for a road vehicle.

In particular, the body object of the present invention comprises one or more axles, specifically suitable for supporting and for damping the static and dynamic actions which the wheels of the respective axles are subjected to a result of the load and motion of the vehicle.

In addition, the body object of the present invention is specifically suitable for transporting live animals in such a manner that once loaded in the body they have sufficient space for making a journey or a mere transfer in the best comfort possible. In particular, the animals transportable by means of the body object of the present invention are of different types or species: from animals of a small size, such as pigs, ovine and caprine, to larger animals, for example cattle, such as cows or bulls.

One of the main problems to take into consideration when manufacturing and designing said bodies is that of making them as comfortable as possible for the animals contained therein; specifically to have as spacious a containment area as possible so that the animals inside it have as much room as possible.

In particular, one of the directions of development, in search of comfort, which the prior art took was that of increasing the useful height inside the body obviously while remaining within the maximum height limits imposed by legislation.

Specifically, in the prior art, said problem was tackled by producing bodies with independent suspension systems thereby lowering the truck bed, bringing it closer to the road.

To discharge the forces between one wheel and another, to avoid particularly disadvantageous pendulum effects, influencing the driveability of motor vehicles with repercussions on driving comfort, the kinematic system needs to be closed, the forces thereby being discharged from one side to the other of the body; for this reason the bodies of the prior art close the structure above the wheels, according to the "upturned frame" method. The bodies of the prior art have in fact rigid and non-detachable intermediate floors or roofs. Obviously, all this poses great limitations on the designer who finds himself having to make forced design choices.

The purpose of the present invention is to make a loading body for the transport of live animals which overcomes the drawbacks of the prior art and satisfies the aforementioned requirements.

In particular, the body object of the present invention comprises an axle suitable for permitting a greater useful height of the area habitable by the animals resolving the problem of the comfort of the animals, without limiting said solution to a unique type of body; the body which the present invention relates to is in fact not limited to a particular type, allowing the designer to use any type of body, according to the requirements to be satisfied, and even with loading decks movable vertically, without negatively influencing the driveability of the vehicle.

Such purpose is achieved by a body according to claim 1 below. The dependent claims show embodiment variations.

The characteristics and advantages of the body according to the present invention will be evident from the description below, made by way of a non-limiting example, in accordance with the appended drawings, wherein:

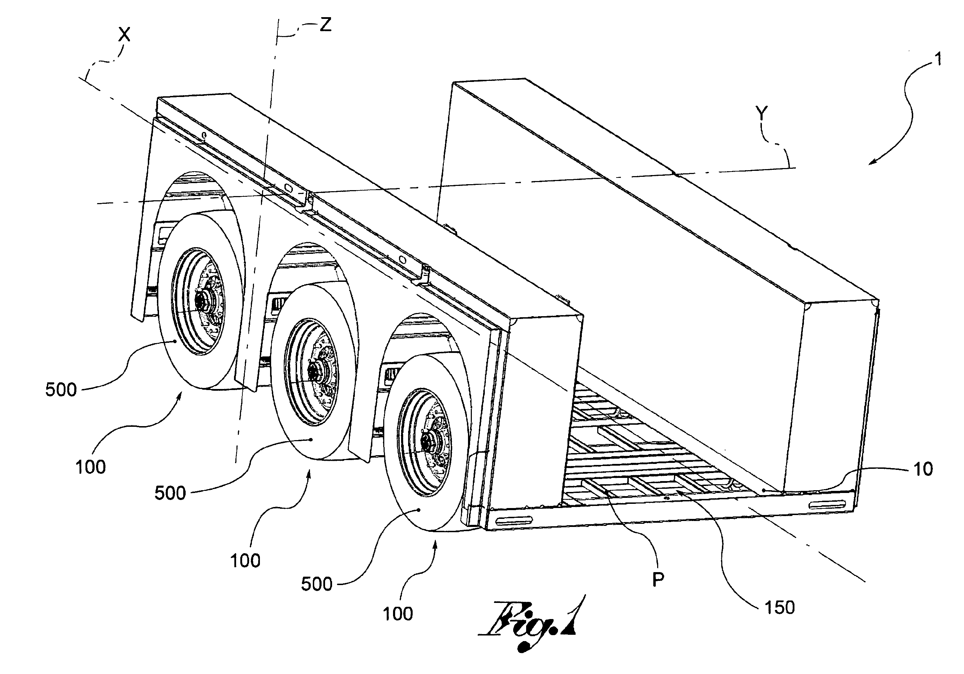

- figure 1 shows a perspective view of a portion of a loading body of a truck for the transport of live animals;

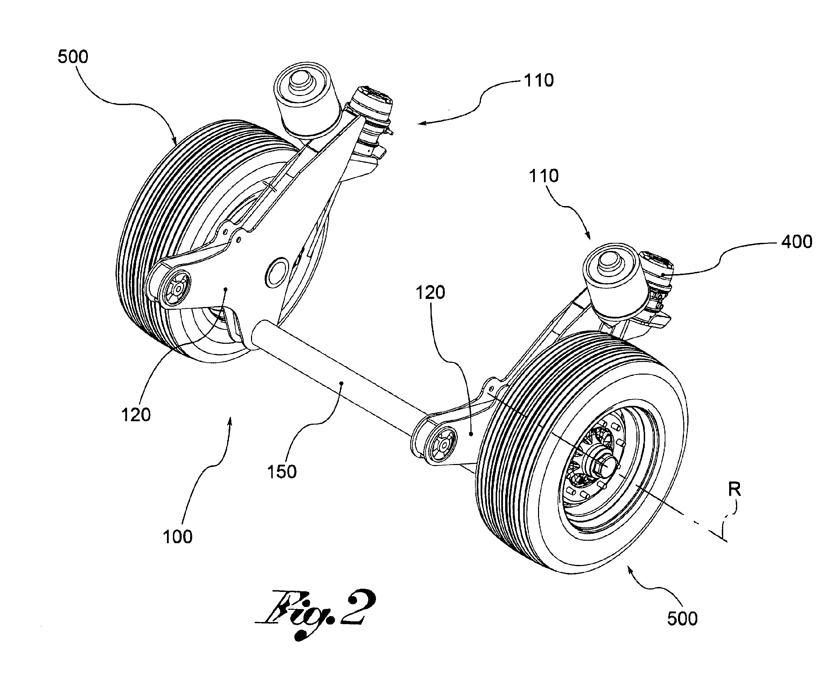

- figure 2 shows a perspective view of an axle which is part of the body which the present invention relates to, mounting both wheels;

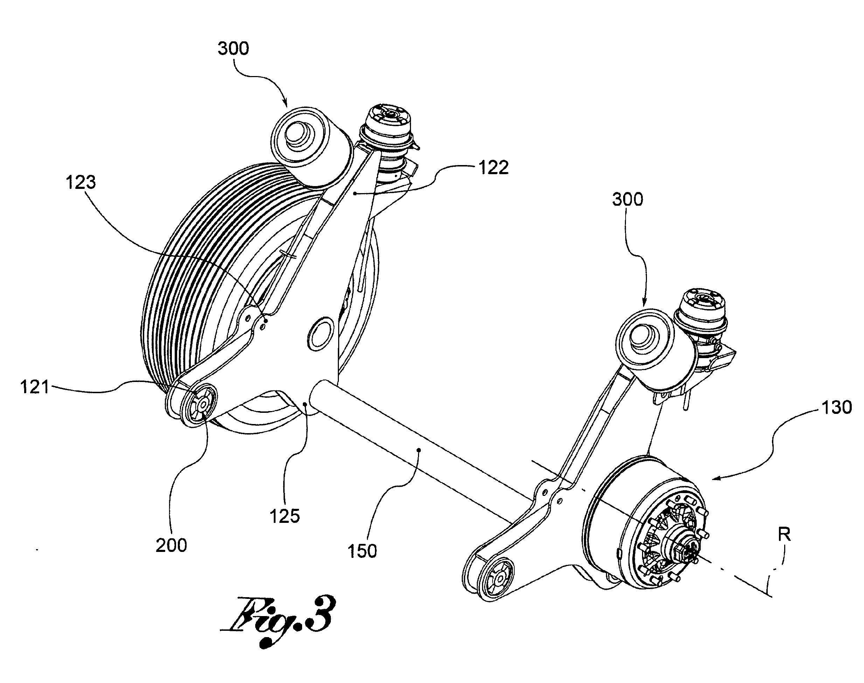

- figure 3 shows a perspective view of an axle which is part of the body which the present invention relates to, mounting only one wheel;

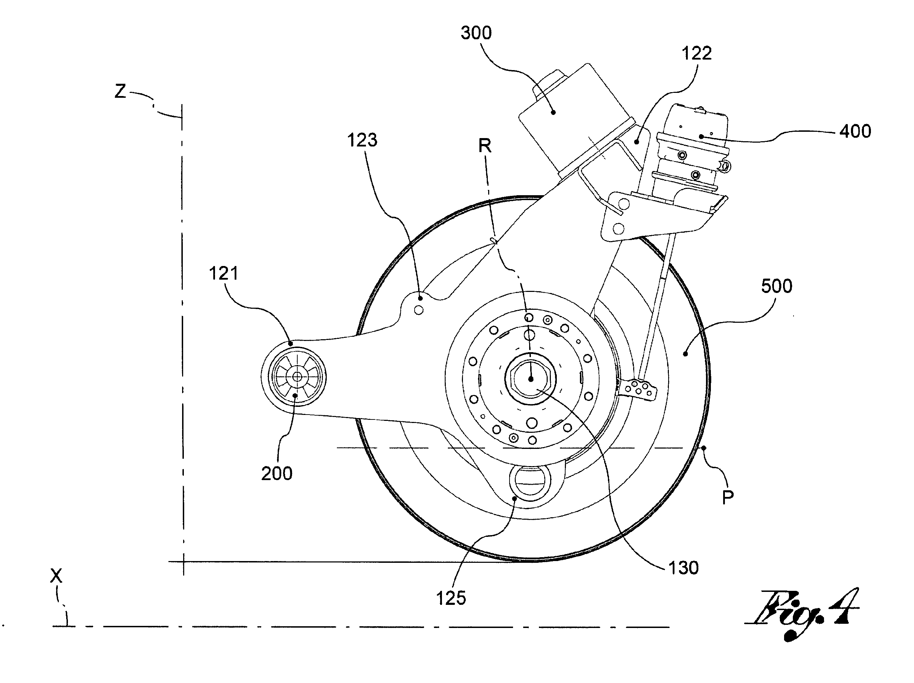

- figure 4 shows a side view of the axle shown in figure 3 in which the plane which the loading deck of the body lies on and extends is shown;

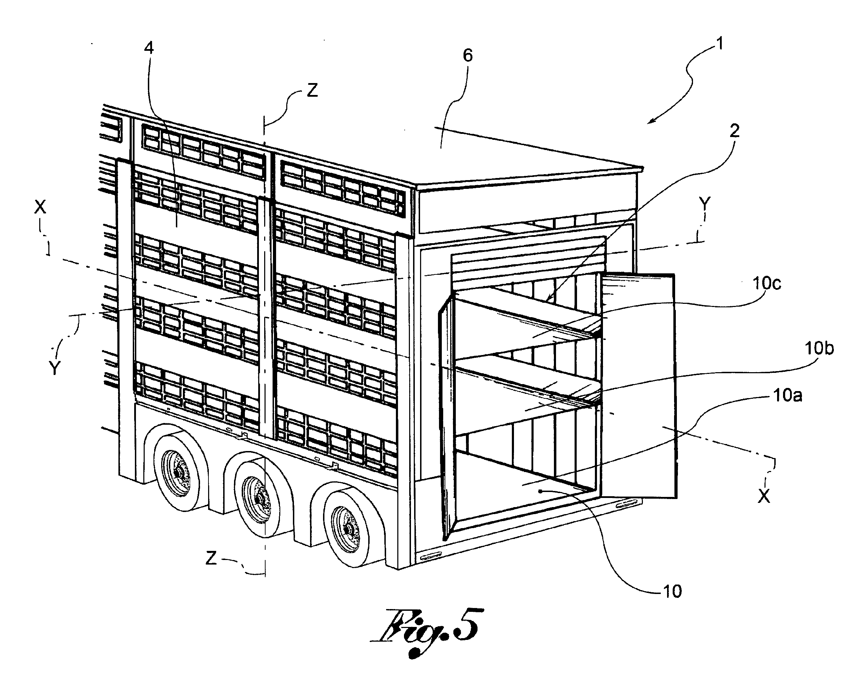

- figure 5 shows a perspective view of a body which the present invention relates to, comprising a multiplicity of loading decks;

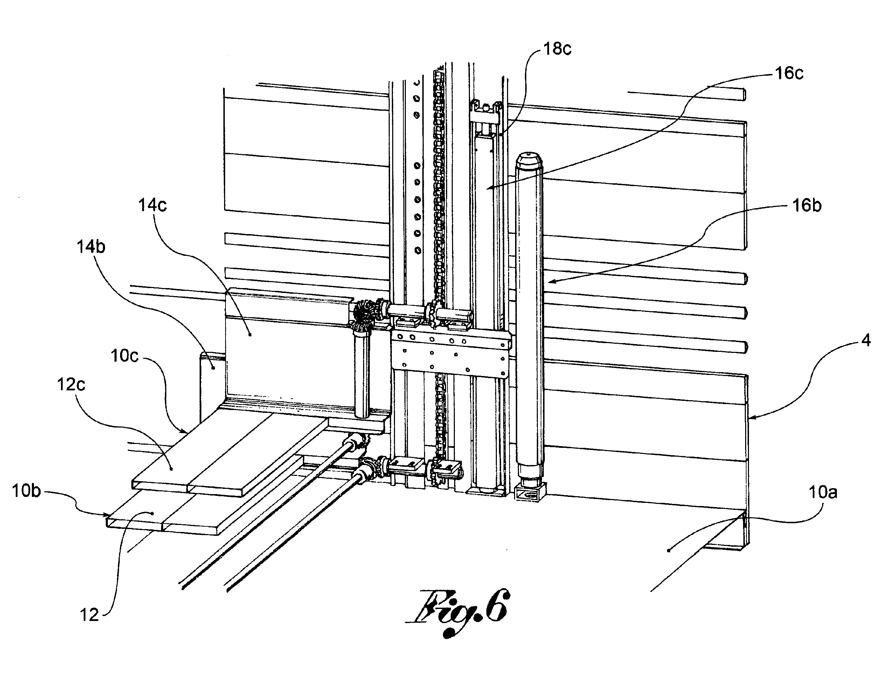

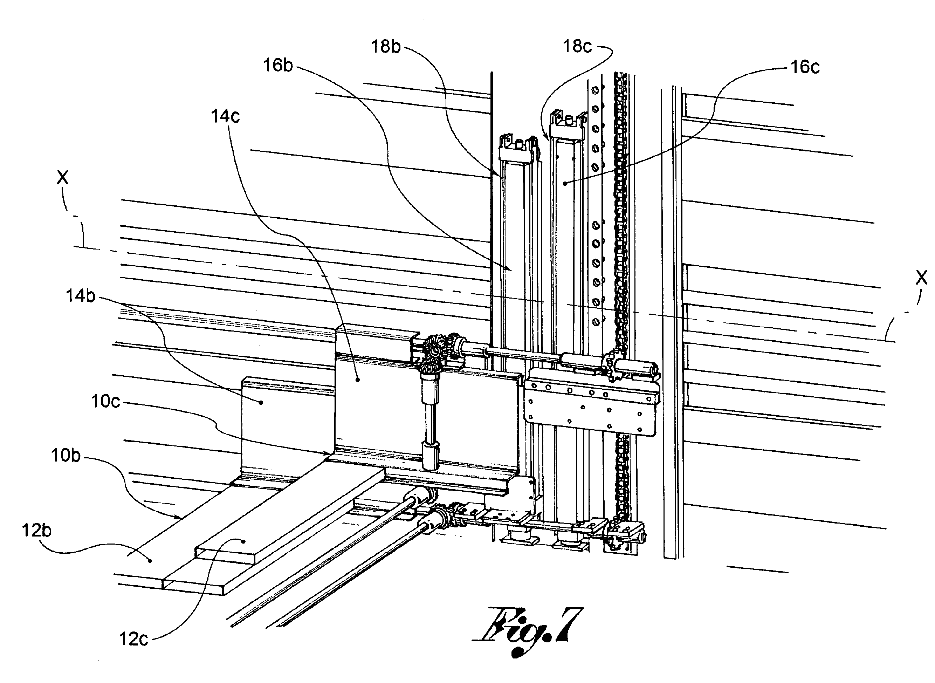

- figures 6 and 7 show two schematised perspective views of two embodiments of a lifting device for loading decks, comprised inside the body.

According to the appended drawings, reference numeral 1 globally denotes a loading body for live animals, for a transport vehicle.

Said body 1 comprises a loading deck 10 which the animals climb onto to get into the body 1 and thus be transported.

In particular, on said loading deck 10 the animals can lie down but above all stand.

Preferably, animals of any type or species can be transported; in particular, the body 1 object of the present invention is suitable for transporting cattle, such as cows and bulls, pigs, ovine and caprine.

A longitudinal direction X is defined for the body 1, along the direction of rectilinear movement of the vehicle which the body is connected to, a transversal direction Y, in the direction of the width of the body 1, and a vertical direction Z, perpendicular to the road surface which the vehicle moves on, in the direction of the height of the body 1.

The body 1 has an inner loading compartment 2, to load the live animals.

The loading compartment 2 is delimited transversally by lateral sides 4, preferably provided with apertures for the passage of air towards the inner compartment 2.

Vertically, on the top, the compartment 2 is delimited by a roof 6, preferably vertically mobile to allow the positioning of the loading decks, especially in the embodiment in which they in turn are mobile, as described below.

In a preferred embodiment, the body 1 comprises a plurality of loading decks, superposed in a vertical direction Z.

In particular, the body 1 comprises a lower loading deck 10a, which forms the floor 10 of the body 1; generally, the deck 10 is fixed.

Furthermore, the body comprises an intermediate loading deck 10b and an upper loading deck 10c, movable in the vertical direction; the intermediate deck is positioned between the lower deck 10a and the upper deck 10c.

According to a preferred embodiment, the intermediate deck 10b comprises a bottom 12b, suitable for supporting the loaded animals, and side walls 14b, transversally distanced and projecting from the bottom 12b upwards.

Similarly, according to a further embodiment, the upper deck 10c comprises a bottom 12c, suitable for supporting the loaded animals, and side walls 14c, transversally distanced and projecting from the bottom 12c upwards.

Furthermore, the body 1 comprises a drive device, connected to the intermediate deck 10b and to the upper deck 10c, to move them vertically.

In particular, the drive device comprises first drive means connected to the intermediate deck 10b.

According to a preferred embodiment, the first drive means comprise at least one piston-cylinder group 16b connected to the intermediate deck 10b to move it on command.

For example, the first drive means comprise a first lifting rod 18b connected, on one side to the piston and on the other to the intermediate deck 10b, for example to the bottom 12b of it, to keep the intermediate deck, and in particular said bottom, at a height lower than the connection position of said piston and said first rod.

Furthermore, the drive device comprises second drive means, independently operable from the first drive means, connected to the upper deck 10c, to move the intermediate deck 10b independently of the upper deck 10c, up and down.

According to a preferred embodiment, the second drive means comprise at least one piston-cylinder group 16c connected to the upper deck 10c to move it on command.

For example, the second drive means comprise a second lifting rod 18c connected, on one side to the piston and on the other to the upper deck 10c, for example to the bottom 12c of it, to keep the upper deck, and in particular said bottom, at a height lower than the connection position of said piston and said second rod.

Preferably, in addition, the drive device comprises:

- first mechanical blocking means suitable for blocking the intermediate deck at a predefined height, when the first drive means are deactivated;

- second mechanical blocking means suitable for blocking the upper deck at a predefined height, when the second drive means are deactivated.

Preferably, moreover, the drive device comprises control means, for example electronic, or such as to be radio-controlled, operatively connected to the first and second drive means, to control them independently.

In a preferred embodiment, the body 1 comprises an axle 100 suitable for supporting and for damping the static and dynamic actions which the wheels of the respective axle are subjected to as a result of the load and motion. The axle 100 is in fact suitable for absorbing the static forces caused by a variation in the load to be transported, starting from an empty body 1 up to a fully loaded body 1, configurations which clearly influence the height of the body 1 and, in particular, of the deck 10 from the ground. And again, the axle 100 is suitable for damping the dynamic forces caused by the motion of the truck and in particular those caused by unevenness and obstructions present on the road rather than those caused by changes in trajectory, for example such as when driving around a roundabout.

In a preferred embodiment, the body 1 comprises a series of axles 100. In particular, the body 1 comprises two or three axles 100 positioned consecutively in the longitudinal direction X.

In a preferred embodiment, the axle 100 comprises two wheel carrier structures 110, suitable for respectively supporting a wheel group 500.

Specifically, said structures 110 are suitable for supporting wheels or wheel groups 500 fixed to the frame of the body 1 as we shall see, such as single wheels or twin wheels and or wheels at least partially comprising the respective braking system.

In particular, said structures 110 are positioned facing each other, one on the right and one on the left of the body 1.

In a preferred embodiment, each structure 110 is suitable for being attached to the frame of the body 1 and for rotationally supporting the respective wheel or wheel group 500 in such a way that the centre of rotation of said supported wheel is positioned higher than said loading deck 10.

That is to say that having identified the plane P along which the deck 10 lies and substantially extends, the centre of rotation of the wheels is always positioned higher than said plane P.

In other words, in the vertical direction Z, starting from the road, upwards, one first encounters the deck 10 and subsequently the centre of rotation of the wheels of the body.

In a preferred embodiment, the axle 100 further comprises a bar element 150 suitable for firmly joining said wheel carrier structures 110.

This way the forces acting on one wheel carrier structure 110 are transmitted and partially, in turn, damped, on to the facing wheel carrier structure by means of said bar element 150.

That is to say that the system transfers and damps the forces acting on the axle 100 inside the same regardless of the shape of the body 1.

Preferably, the bar element 150 extends in a transversal direction Y.

Moreover, in a preferred embodiment, the bar element 150 extends from one wheel carrier structure 110 to the other under the loading deck 10, in other words, the bar element 150 extends under the plane P along which the deck 10 lies and substantially extends.

In a preferred embodiment, the wheel carrier structure 110 and the bar element 150 are in steel and are reciprocally welded to each other.

In particular, the bar element 150 is preferably a very thick tubular element.

In other words, the bar element 150 is an element with a hollow or solid circular or polygonal cross-section inscribable in a circle of a diameter of over 50mm, preferably 114mmm and at least 5mm, preferably 16mm thick.

In a preferred embodiment, each wheel carrier structure 110 is suitable for being attached to the frame of the body 1.

Specifically, the wheel carrier structure 110 in fact comprises a load bearing frame 120 suitable for attaching to the frame of the body 1 (suspended mass) the respective wheel or wheel group 500 (non suspended mass). Preferably, the load bearing frame 120 is attached to the frame of the body in a rotational manner, that is, in such a way that it is suitable for rotating around a rotation axis.

In a preferred embodiment, the load bearing frame 120 is made in one piece.

Preferably, the load bearing frame 120 is box-like, for example a box of sheet metal with an outer thickness of at least 70mm, preferably 90mm.

Preferably, the wheel carrier structure 110 further comprises a wheel carrier pin 130 which the respective wheel or wheel group 500, or wheel and relative braking system can be mounted on.

In particular, the wheel carrier pin 130 is attached to the respective load bearing frame 120 in such a way as to be able to turn idle around a rotation axis or is firmly attached to the respective load bearing frame 120; preferably the wheel carrier pin 130 extends in a transversal direction Y from the respective load bearing frame 120 outwards; specifically, the wheel carrier pin 130 extends around an pin axis R parallel to the transversal direction Y; the wheel or wheel group 500 mounted on it rotates around said wheel carrier pin 130, consequently around said pin axis R on which the centre of rotation of said wheel or wheel group 500 lies. So the wheel carrier pin 130 extends from the load-bearing frame 120 above the deck 10, above the plane P; the pin axis R is therefore positioned above the plane P.

In a preferred embodiment, the load bearing frame 120 is a three or four-lobed shape. In other words, the frame comprises some extremities which extend from the wheel carrier pin 130.

Preferably, the frame 120 comprises in fact an attachment end 121, by means of which, said attachment of the wheel carrier structure 120 to the body is made.

Specifically, said attachment end 121 is suitable for housing for such purpose a hinge element 200 so that the rotation of the wheel carrier structure 120 around said attachment end 121 is permitted.

Preferably, the attachment end 121 is positioned in line with or above the centre of rotation of the wheel group 500 or wheel pin 130.

In a preferred embodiment, said hinge element 200 is a silent block, or in further embodiments, a brass bearing.

Moreover, the load bearing frame 120 comprises a bar end 125 to which the bar element 150 is attached.

When the axle 100, or the axles depending on the number, are attached to the body 1 each bar end 125 projects below the deck 10. The bar end 121 is in fact positioned below the wheel pin 10 and the relative pin axis R, and below the deck 10.

In a preferred embodiment, each wheel carrier structure 110 comprises specific damping means such as air springs 300 or pneumatic pistons (not shown).

Specifically, the load bearing frame 120 comprises damper ends suitable for acting in conjunction with said damper means: a first damper end 122 which the air spring 300 is attached to; a second damper end 123 which a hydraulic shock absorber is attached to (not shown).

Preferably, both the first damper end 122 and the second damper end 123 are positioned above the centre of rotation of the wheel, above the wheel pin 130.

Preferably, the air spring 200 is suitable for damping the oscillations caused by driving on the road as well as those caused by the load of the body, while the hydraulic shock absorber is suitable for absorbing and damping the oscillation peaks, for example caused by the presence of obstructions on the road.

In addition, next to the first damper end 122 the respective braking system 400 of the wheel or wheel group 500 can be positioned, for example by means of a special flange firmly joined to the respective wheel carrier structure 110.

Innovatively, the body object of the present invention comprises an axle such that the body provides greater comfort inside for the live animals housed therein.

In fact the body has, advantageously a greater useful height than the bodies typical of the prior art. In particular, the body object of the present invention recuperates a portion of useful height which is thereby used to provide greater comfort for the animals inside.

Advantageously, thanks to the shape and structure of the axle a rigid structure is created which thereby entails an improvement in the driveability of the truck regardless of the increase in useful height and the type of body.

Advantageously, the bar element acts as a torsion bar between the two wheel carrier structures in such a way that the axle has a high degree of torsional rigidity; this way the body may be of any type leaving the designer the freedom to choose according to the requirements.

Advantageously, the body which the present invention relates to is not limited to a specific type: the body object of the present invention is a trailer or a semitrailer; or again, the body object of the present invention is an open or closed body, with or without a roof, or again rigid such as supported with a centring rather than with a van body, or have a solid structure delimited with a tarpaulin, with or without a roof.

Advantageously, therefore, this way it is no longer necessary to have an "upturned frame" structure, as happens in the prior art and therefore the roof and any loading decks may be mobile; it is therefore no longer necessary for the body to be closed: open bodies with a mobile or semi-mobile roof, with multiple fixed or mobile decks may therefore be made.

In fact according to a further advantageous aspect the body may comprise several mobile loading decks or not and is therefore able to load and transport animals on several levels: for example two levels of cattle, or three or four levels of ovine, pigs or caprine. Advantageously, by increasing the useful height of the body the animals on the various loading decks benefit in terms of comfort and space.

According to a further advantageous aspect thanks to the axle and its high degree of rigidity, even if said bodies with several loading decks prove very high and therefore have a very high barycentre, the body is particularly rigid making the movement of the motor vehicle very stable.

Moreover, it can be seen how advantageously thanks to said axle it is possible to transport live animals, damping the load variations caused by the fact that said animals are free to move inside by modifying the centre of gravity of the body.

Advantageously, thanks to the axle and its high degree of rigidity, the movement of the body does not even feel the effects of sudden changes of direction such as those caused when driving around roundabouts.

Advantageously, the wheel carrier structure absorbs and damps the torsional forces to which the axle is subjected, to the point that it is possible to attach the load bearing frame of the axle and the frame of the body using solely a pair of silent blocks.

It is clear that a person skilled in the art may make modifications to the body described above so as to satisfy contingent and specific requirements, while remaining within the sphere of protection as defined by the following claims.

## Claims

1. Loading body (1) for the transport of live animals, wherein the loading body (1) comprises a loading deck (10) which the animals climb onto to get into the body (1) comprising an axle (100) suitable for damping the static and dynamic actions which the wheels or wheel groups (500) of the respective axle (100) are subjected to a result of the load and the motion, comprising:
- two wheel carrier structures (110), suitable for respectively supporting a wheel group (500), positioned facing each other, one on the right and one on the left of the body (1), wherein each structure has the centre of rotation of the wheel positioned higher than said loading deck (10);
- a bar element (150) suitable for firmly joining said wheel carrier structures (110).

2. Body (1) according to claim 1, wherein the bar element (150) extends from one wheel carrier structure (110) to the other under the loading deck (10).

3. Body (1) according to any of the previous claims, wherein the bar element (150) and the wheel carrier structures (110) are in steel, and are reciprocally welded to each other.

4. Body (1) according to any of the previous claims, wherein the bar element (150) has a hollow or solid circular or polygonal cross-section.

5. Body (1) according to any of the previous claims, wherein the wheel carrier structure (110) comprises a load-bearing frame (120) suitable for being attached rotationally to the frame of the body (1) and a wheel carrier pin (130) which extends from said load bearing frame (120), on which the wheel groups (500) are mountable and are free to rotate, wherein the load bearing frame (120) comprises a bar end (125) to which the bar element (150) positioned under the loading deck (10) is attached.

6. Body (1) according to claim 5, wherein the load-bearing frame (120) further comprises:
- an attachment end (121), housing a hinge element (200) around which the wheel carrier structure (110) is free to rotate, positioned in line with or above the centre of rotation of the wheel group (500);
- a first damper end (122) to which an air spring is attached, positioned above the centre of rotation of the wheel;
- a second damper end (123) to which a hydraulic shock absorber is attached, positioned above the centre of rotation of the wheel.

7. Body (1) according to any of the claims 5 or 6, wherein the load bearing frame (120) is made in one piece.

8. Body (1) according to any of the claims 5 or 6 or 7, wherein the load bearing frame (120) is box-like.

9. Body (1) according to any of the previous claims, comprising:
- a lower loading deck (10a), which forms the floor of the body 1, habitable by the animals;
- an upper loading deck (10c), which forms a second floor of the body, in turn habitable by the animals, movable vertically, starting from the lower loading deck (10a) up to a predefined height above the lower loading deck (10a), by means of a mechanical drive device.

10. Body (1) according to claim 9, comprising a plurality of intermediate loading decks (10b), forming one or more intermediate floors, in turn habitable by the animals, movable vertically, starting from the lower loading deck (10a) up to a predefined height above the lower loading deck (10a) and below the upper loading deck.

11. Body (1) according to any of the previous claims, comprising a vertically mobile roof (6) which delimits said body above (1).
